# EUROPEAN PATENT APPLICATION

(11) **EP 4 116 015 A1**
(43) Date of publication of application: **11.01.2023**
(21) Application number: 21183727.3
(22) Date of filing: 05.07.2021
(51) Int. Cl.: B22F 10/28, B22F 10/85, B22F 12/90, B33Y 50/02, G01D 3/08, G01D 18/00, G05B 9/03

(54) **QUALITY ASSURANCE IN ADDITIVE MANUFACTURING MONITORING**

(71) Applicant: Siemens Energy Global GmbH & Co. KG, 81739 München (DE)
(72) Inventor: Geisen, Ole, 14057 Berlin (DE); Jahangir, Hamid, 52074 Aachen (DE)

(57) **Abstract**

A Method for quality assurance in additive manufacturing monitoring is presented, the method comprising, (i), providing a machine control unit (6) of an additive manufacturing system (100), the control unit (6) being coupled to a primary machine sensor (4) and a redundant machine sensor (4'), (ii), conducting a sensor check, wherein the primary sensor (4) and the redundant sensor (4') are read out and the respective readings of the primary sensor (4) and the redundant sensor (4') compared, (iii), conducting an algorithm check, wherein a primary algorithm (A) and a backup algorithm (A, B) are executed for each of the sensor readings, and, (iv), applying a logic AND-function with the checked sensor readings as input each with a result of the primary algorithm (A) as input and with a result of the backup algorithm (A, B) as input, respectively, wherein a manufacturing process of the system (100) is only maintained when the AND-functions read out "true" (T) and wherein - when the AND-functions read out "false" (F) - the process (P) is aborted. Furthermore, a related additive manufacturing methodology, the machine control unit and a related computer program product are provided.

## Description

The present invention relates to a method of or for quality assurance in additive manufacturing, preferably in the field of additive manufacturing monitoring.

Said method may be computer-aided and/or computer-implemented. Moreover, a related additive manufacturing process, a machine control unit and a related computer program product are subject to the present invention.

In many branches of technology hardware malfunctions can be resolved by replacement of the deficient component or system. Replacement may - depending on the complexity of the system - take from a few minutes to several days, for instance. Particularly, accessibility and/or availability of the respective substitute part determine the complexity of the technical issue. When, for example, a software defect, flaw or bug is concerned, the only resort may be the reboot of the entire system for temporarily resolving the problem. However, rebooting can take a few seconds to several hours also, based on the intricacy of the system. In additive manufacturing, particularly a multiplicity of problems may be encountered during a given manufacturing process, such as selective laser melting or laser metal deposition. When such a printing process keeps on running without noticing any anomaly, like deteriorated material or false process instructions, e.g. due to a faulty sensor measurement on machine condition of the system, there may be severe consequences for the process as a whole.

Moreover, the system may run out of a reliability tolerance, such as by sensor value drifting, polluted optical components, insufficiently set laser power or gas flow issues, just to name a few problems. Generally, if sensor measurements were not measured accurately and appropriately or not recorded at all, or e.g. monitoring software is bugged, quality of the whole process and therewith material properties of the component or part to be manufactured cannot be assured.

In a particular case, if an oxygen or humidity sensor monitoring e.g. in a powder bed fusion (PBF) process becomes deficient, this could lead to serious part quality issues as any sensor reading needs to comply with a properly defined working range or tolerance. When any given sensor measurement runs out of said range or calibration, quality of the process can already be affected at an early stage, e.g. at which maintenance intervals are not yet foreseen.

Moreover, data rendered during the process can be invalid because of faulty machine sensors and/or defective monitoring algorithms.

Still further, in-situ process monitoring data of the printing process using e.g. powder bed cameras, melt pool monitoring systems, thermal cameras or the like may become deficient which may lead to a significant miss in image information or data scrapping due to non-calibrated hardware and/or software.

Additive manufacturing, particularly powder-bed methods have proven to be useful and advantageous in the fabrication of prototypes or complex components, such as components with filigree structure or functionally cooled components. Further, the additive manufacture stands out for its short chain of process steps which in turn enables material economization and a particularly low lead time.

Hence, as additive manufacturing (AM) or 3D-printing of complex parts usually takes from days up to weeks, quality control becomes ever more important as the degree of quality determines the time, complexity and cost of the whole process. It is, thus, important to ensure that not only the part which is to be shipped to a customer is quality certified but also that the related (sensor) data quality is maintained and certified.

For example, the component or workpiece to be manufactured denotes a component of a turbo machine, e.g. applied in the flow path hardware of a gas turbine. In the alternative, the component may pertain to any high-performance component, such as a component applied in power generation, in the aviation or the automotive industry.

Additive manufacturing or 3D-printing techniques comprise e.g. powder-bed-fusion methods, such as selective laser melting (SLM) or laser powder bed fusion, selective laser sintering (SLS) and electron beam melting (EBM). Further additive manufacturing approaches relate to "Directed Energy Deposition (DED)", such as laser cladding, wire-arc manufacturing, electron beam or plasma welding, metal inkjet molding (MIM), so-called sheet lamination methods, or thermal spraying (VPS, LPPS) methods, cold spraying (GDCS).

Related apparatuses or setups for such methods usually comprise a manufacturing or build platform on which the component is built layer-by-layer after providing of a layer of a base material which may then be melted, e.g. by an energy beam, such as a laser, and subsequently solidified.

In PBF, the layer thickness is determined by a recoater that moves, e.g. automatically, over the powder bed and removes excess material from a manufacturing plane or build space. Typical layer thicknesses amount to between 20 µm and 40 µm. During the manufacture, said energy beam scans over the surface and melts the powder on selected areas which may be predetermined by a CAD-file according to the geometry of the component to be manufactured. Said scanning or irradiation is preferably carried out in a computer-implemented way or via computer aided means, such as Computer-Aided-Manufacturing (CAM) instructions, which may be present in the form of a dataset. Said dataset or CAM-file may be or refer to a computer program or computer program product.

It is an object of the present invention to provide means that help to resolve the above-mentioned issues, particularly to provide for a far improved monitoring capability in additive manufacturing, be it in terms of hardware as well as software.

The mentioned object is achieved by the subject-matters of the independent claims. Advantageous embodiments are subject-matter of the dependent claims.

An aspect of the present invention relates to a method for quality assurance in additive manufacturing monitoring comprising providing a machine control unit of an additive manufacturing system, such as an LPBF, SLM or LMD or wire-arc AM system. The control unit is or is to be functionally coupled to a primary or first machine sensor and a redundant, second, machine sensor.

The method comprises conducting a sensor check, such as a redundancy sensor data check, wherein the primary sensor and the redundant sensor are read out and the respective readings of the primary sensor and the redundant sensor compared. E.g. only when the readings coincide or fall within certain limits, the given check may prove that the related condition is met and "true" is read out.

The method further comprises conducting in algorithm check, such as a redundancy algorithm check, wherein a primary algorithm and a backup (redundancy) algorithm are executed, checked or run for each of the sensor readings or measurements.

The method further comprises applying a Boolean logic function, such as an AND-function, or a related conjunct with the (checked) sensor readings as input, each with a result of the primary algorithm as input and with the result of the backup algorithm as input, respectively, wherein the manufacturing process of the system is only maintained or upheld when the AND-function(s) read out "true" and wherein - when the AND-functions read out "false" - the process is e.g. aborted.

It is inherent to said logic AND-function that a result to read out from the function is true if and only if both inputs or input conditions are confirmed with "true".

As an advantage of the presented methodology, a sophisticated, nested, redundancy check of the quality assurance on the sensor level as well as on the algorithmic level is provided for AM monitoring.

This advantageously helps to improve or ensure data reliability in the process, in turn at sensor level as well as algorithmic level. Moreover, reliance upon any process monitoring result or data is further improved and rendered dynamically adjustable. In other words, malfunctioning of sensors and algorithms is effectively prevented, and therewith severe consequences for components that were manufactured in the route of industrialized additive manufacturing.

Still further, data verification can be rendered independent of several sources of data; algorithms be verified in the same way from different origins. This allows to vastly increase process robustness in additive manufacturing, particularly in related mass or serial production of complex parts.

In an embodiment the primary sensor is a monitoring and/or machine condition sensor, and the redundant sensor is a sensor of the same type, such as a type of sensor having a relatively high probability of failure during service. This enables to render the "redundancy" highly effective and the overall process to be stable.

In an embodiment the primary sensor or, as the case may be, both or all named sensors are set up to detect a process anomaly, such as any process flaw, inaccuracy, artefact, hotspot occurring during the selective irradiation of scanning path's, a structural defect and/or a recoating deficiency, such as during monitoring and/or during the actual manufacture of the given workpiece.

In an embodiment, the primary sensor is any sensor capable of detecting the above-mentioned process anomaly.

In an embodiment, the primary sensor is or is part of an optical camera and/or an optical tomography device.

In an embodiment, the primary algorithm comprises a provision or instruction for (continuously) monitoring and/or evaluating an operation of the sensor(s), such as during service of the system, wherein said provision proves if the system is in a proper condition or operational state. Said prove is preferably successful, i.e. the logic outcome rendered "true", when related sensor values equal or substantially equal.

In an embodiment the proper condition demands sensor values to comply to a predetermined set of ranges. It is explicitly contemplated by the present invention that said ranges are dynamic or may vary over time, for a given sensor. To this effect, in compliance with the quality aimed at by the presented manufacturing monitoring methodology, it is sufficient when divergence or undesired drifting of related sensor values out of a given range of threshold is prevented.

In an embodiment wherein the backup algorithm is different from the primary algorithm, and wherein the backup algorithm is set up to prove if an algorithmic fault or deficiency occurred, such as a bug was identified or a plausibility check failed, or the like.

In an embodiment, the backup algorithm resembles the primary algorithm, and wherein the backup algorithm is set up to prove if an algorithmic fault occurred.

In an embodiment, the control unit of system is set up such that any, i.e. sensor-based or algorithmically detected fault can be traced back and an origin of the related anomaly e.g. be easily identified.

In an embodiment - when the AND-function(s) read out "true" - the process is either continued or, such as depending on the severity of the detected fault or anomaly, interrupted and/or (subsequently) repaired and/or resumed. For instance, the process may need to be interrupted and/or repaired once a sensor runs out of its working point or calibration ranges, or related value drifts occur. This may e.g. be the case for machine condition sensors which do not directly detect a structural defect of the workpiece to be generated. Alternatively, even a process or manufacturing defect, detected by a monitoring sensor or a related sensor value, may be "healed" and/or repaired during a process interruption, wherein the overall build job or process may later on be resumed. In other words, no abortion of the overall process is necessary.

In an embodiment a conditional, such as an if/else-statement or related programming language command is implemented (at sensor level), to which checked sensor readings are put in and - only if the threshold of the sensor values is exceeded or the values fall below said threshold - the process is interrupted and/or repaired; otherwise, the process is preferably continued.

In an embodiment, the conditional is part of a closed-loop methodology, such as a process which may grade the procedural consequences and requirements to resume a given manufacturing process.

A further aspect of the present invention relates to a method of additive manufacturing of a workpiece, preferably by a powder bed fusion method, such as selective laser sintering, selective laser melting or electron beam melting, which applies the quality assurance method as described.

A further aspect of the present invention relates to a control unit configured to carry out the method as described herein, wherein the control unit is set up to be part of a powder bed fusion additive manufacturing system or device.

A still further aspect of the present invention relates to a computer program product, comprising instructions which, when the program is executed by a data processing apparatus or a computer, cause it to carry out the quality assurance method as described herein.

A computer program product as referred to herein may relate to a computer program means or media constituting or comprising a computer-readable storage medium (be it volatile and non-volatile) like a memory card, a USB stick, a CD-ROM, a DVD or a file downloaded or downloadable from a server or network. Such product may be provided by a wireless communication network or via transfer of the corresponding information by the given computer program. A computer program product may be, include or be included by a (non-transitory) computer-readable storage medium storing applications, programs, program modules, scripts, source code, program code, object code, byte code, compiled code, interpreted code, machine code or executable instructions.

Advantages and embodiments relating to the described quality assurance method and/or the described method of manufacturing may as well pertain or be valid with regard to the control unit and/or the described computer program product.
Figure 1 shows a schematic sketch of the principle of a powder-bed-based additive manufacturing process.
Figure 2 indicates a schematic flow chart of generic process steps according to the present invention.
Figure 3 indicates procedural particulars of the present invention by way of a closed-loop methodology.

Like elements, elements of the same kind and identically acting elements may be provided with the same reference numerals in the figures. The Figures are not necessarily depicted true to scale and may be scaled up or down to allow for a better understanding of the illustrated principles. Rather, the described figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

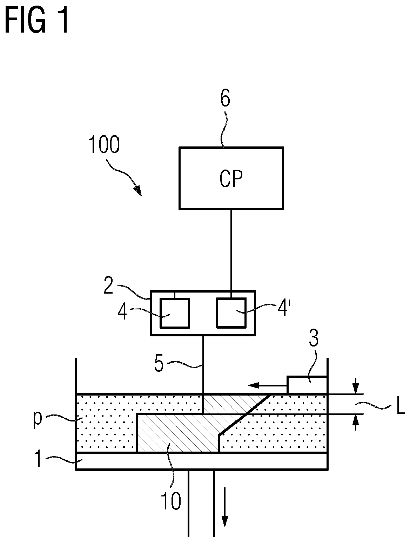

Figure 1 shows an additive manufacturing device or system 100. Said device 100 may be a conventional device for manufacturing any type of components or workpieces, such as by powder-bed-fusion. These techniques employ a bed of a powder or base material p which is selectively exposed to an energy beam 5 in a layerwise fashion. Said beam 5 may be a laser or an electron beam of an irradiation apparatus or energy beam source 2. Accordingly, the given PBF method may relate to selective laser sintering, selective laser melting or electron beam melting.

Said processes particularly allow to establish a workpiece or part 10 on top of a build platform 1 as powdery layers L for the part 10 are fused or welded onto said platform 1 and consecutively irradiated by selectively solidified by the beam 5 according to its predefined CAD-geometry. After the irradiation or fusing of each layer, the build platform 1 is usually lowered according to the layer thickness and a new base material layer is deposited on a manufacturing plane by a recoater or recoating device 3.

The irradiation apparatus 2 is connected or coupled to or may be controlled by a control unit 6, e.g. comprising a processor or processing unit.

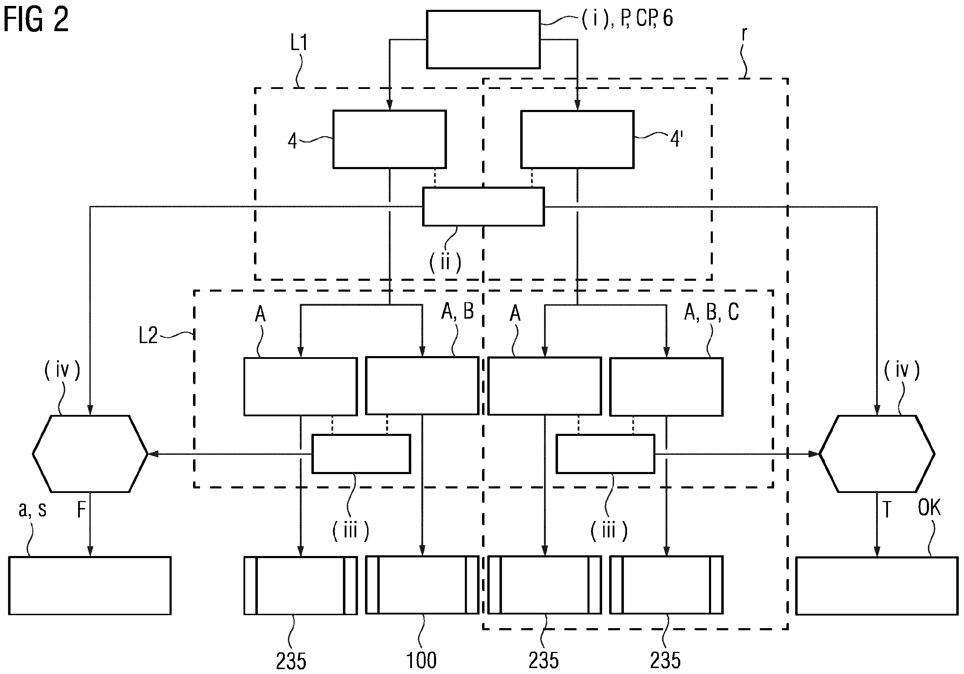

The system 100 may further feature a sensor 4. The sensor 4 is a primary sensor, more particularly a monitoring and/or machine condition sensor, capable of detecting an operational state of the whole system 100, monitoring the manufacturing process (cf. numeral P) and/or e.g. identifying a property of the as-manufactured workpiece. To the described effect, the primary sensor or a related ensemble of sensors is expediently set up to detect any process anomaly a (cf. Figure 2 below), such as a hot spot s, a structural defect and/or a recoating deficiency during the manufacture of a workpiece 10.

Preferably the primary sensor 4 is or is part of a camera system and/or an optical tomography device. Such part may to this effect be or comprise a CCD or sCMOS chip or a photodiode.

The system 100 further features a (second) redundant sensor 4'. Said redundant sensor 4' is preferably a sensor of the same type as sensor 4.

Generally, the term "sensor" as used herein may, however, relate to any monitoring equipment, such as a camera, an optical tomography system, CMOS-device, a computed tomography device, a thermography unit, a probe head for eddie?? current testing, for instance. A sensor may additionally or alternatively pertain to any machine condition sensor for the related additive manufacturing devices or systems or 3D printers. To this effect, said sensor may be or relate to measurement systems measuring or reading the temperature, pressure, gas flow, radiation intensity, such as backscattered radiation from the melt pool, measuring distances, or metrology in general.

Other than depicted in Figure 1, the primary sensor 4 and/or the redundant sensor 4' may be arranged somewhere else (wherever the respective sensor needs to be read out) in the system 100 or its build space (not explicitly indicated), and e.g. detached from the irradiation device 2. Rather, said sensor(s) is expediently coupled to the mentioned machine control unit 6 in order to further process any sensor readings in the described methodology.

Figure 2 indicates a schematic flow chart of a method according to the present invention. The flowchart shall basically illustrate quality assurance measures making use of redundancy checks within the sequence of additive manufacturing or additive manufacturing monitoring. The whole additive manufacturing and/or monitoring process shall be indicated by numeral P at the top in Figure 2. CP shall indicate a computer program or computer program product by which the inventive success of the presented methodology may already be provided. To this effect the presented method of quality assurance may be computer-aided and/or computer implemented.

As a matter of course, for the presented quality assurance method, the described machine control unit 6 of the system 100, being coupled to the primary sensor 4 and the redundant sensor 4', needs to be provided (cf. numeral (i)).

The method further features in step (ii) conducting a sensor check, wherein the primary sensor 4 and the redundant sensor 4' are read out and the respective readings of the primary sensor 4 and the redundant sensor 4' compared. This sensor-based layer or level of the methodology rather refers to the monitoring hardware and is indicated with numeral L1. This step may relate to a computation of a redundancy error check which can be carried out in real-time, by way of reversal checks and/or e.g. by using machine learning algorithms.

The method further features in step (iii) conducting an algorithm check, wherein a primary algorithm A and a backup algorithm (cf. numerals A, B and C in Fig. 2) are executed for each of the sensor readings, i.e., for the branch of the primary sensor (cf. left in Figure 2) and for the branch of the redundant sensor (cf. right in Figure 2). This rather algorithmic layer or level of the methodology may rather refer to monitoring software or algorithmics and is indicated with numeral L2.

The primary algorithm A comprises e.g. a provision for monitoring and/or evaluating an operation of the sensors 4, 4' wherein said provision proves if the system 100 is in a proper condition or operational state. Sufficient (monitoring) quality of the process P is preferably fulfilled when the system 100 is or attains said proper condition. The proper condition may e.g., demand the sensor values to comply to a predetermined set of ranges.

The backup algorithm may, as indicated by the given numerals, either resemble the primary algorithm or be different from the primary algorithm. Whereas the primary sensor and the redundant sensor are preferably of the same type and function, the backup algorithm may prove the algorithmic quality of the process even though it may comprise a provision that is slightly different from the primary one. Preferably, however, the chosen backup algorithm is the same for the process flow of the primary sensor and that one of the redundant sensors.

The part of the methodology that is related to a redundancy in the monitoring is bordered in Figure 2 by a square indicated with reference numeral r. As described herein, said redundancy approach, particularly exploited in the monitoring of additive manufacturing processes, and in turn set up at the sensor level L1 and the algorithmic level L2, goes far beyond conventional redundancy approaches.

The method further features in step (iv) applying a Boolean logic function, such as an AND-function, with the checked sensor readings as input each with a result of the primary algorithm A as input and with a result of the backup algorithm A, B or C as input, respectively, wherein a manufacturing process of the system 100 is only maintained when the AND-functions read out "true" T and wherein - when the AND-functions read out "false" F - the process P is e.g. aborted.

As indicated at the bottom in Figure 2, the exemplary values 235, 100 on the left and 235 and 235 on the right shall indicate that the control unit 6 is preferably set up such that any detected anomaly or fault in the sensor readings and/or an algorithmic result may be traced back in order to identify the origin of the given anomaly.

With the presented methodology, it is advantageously achieved that any given manufacturing process and related data is constantly monitored, supervised and/or checked also with regard to plausibility. Hence, small process anomalies and deviations in the system 100, that would otherwise go unnoticed, are ensured to remain within certain thresholds which allows quality of the overall process to be upheld. Furthermore, a complex and costly scrapping of high-performance workpieces may advantageously be avoided.

Indeed, redundancy may partly already be established to improve reliability and downtime of an overall system. Conventional 3D printer systems are e.g. partly already equipped with pre-installed sensors, which monitor the system's condition continuously and evaluate it using sets of algorithms to ensure the system remains in a proper state.

However, it is known that the addition of redundancy also escalates cost and complexity of a system's design. An effort for the redundancy solution is with the given approach, however, kept at an optimum.

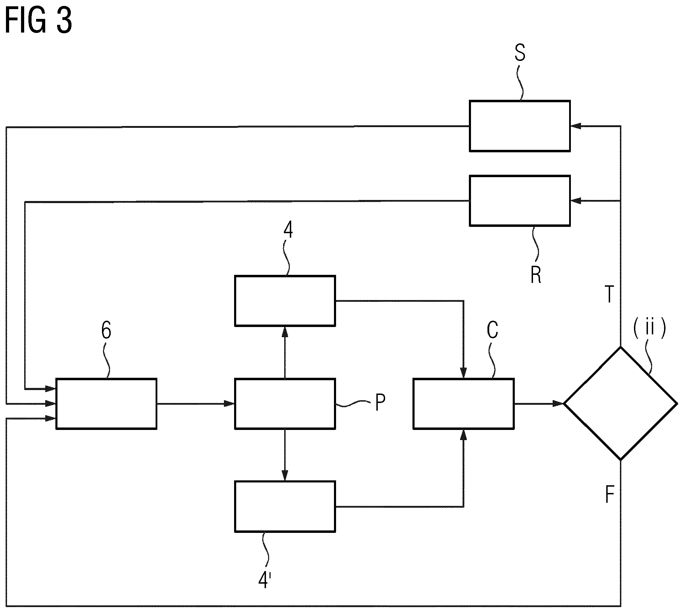

Figure 3 indicates more specifically an embodiment of the presented quality assurance method by way of a closed-loop control approach. Said closed-loop approach is preferably implemented - when the mentioned AND-functions read out "true" T (cf. above), i.e., when the process as a whole is upheld and there is no need for abortion.

In addition to the flowchart as described by way of Figure 2, it is shown that there is a conditional C implemented in the approach of Figure 3. Said conditional C may be implemented via an if/else-statement or related programming command. Said conditional C further refers to described method step (ii).

Particularly, the conditional C shall be implemented such that the (checked) sensor readings or measurement values can be put in as input and - only if a threshold of the sensor values is exceeded or it is fallen below such threshold - the overall process flow shall be interrupted and/or repaired. Otherwise, the process shall be continued. The conditional C may therefore request if a given value deviates from the threshold anyhow and, if yes, "true", indicated with T, is read out; otherwise, the outcome is "false" F and the process may resumed or an operation continued.

In case that the outcome is "true" T, the reaction or consequence in the flow may further differentiate between a notification process and/or a process stop (indicated with numeral S) and a repair mechanism (indicated with numeral R). In other words, depending on the severity of a miss of a given threshold, the process can either be stopped, and an operator gets e.g. notified for possible replacement, recovery and/or resetting measures of a (partly) deficient system. Or, alternatively, a recovery mechanism can be initiated and fed into the machine control unit 6 to perform the desired operation, until the overall process can be resumed again.

With the implementation of the presented measures during in-situ monitoring in AM, advantageously, a smart process monitoring capability, even for automatic "decision-making", is presented. Indeed, such as by making use of machine learning algorithms, self-monitoring algorithms may be developed that even further increase data and process reliability and a robust manufacturing route which complies to highest quality standards. Of course, scrap rates of already partly manufactured workpieces can then significantly be reduced, as an operator can be notified early in the process about the occurrence and the detection of an anomaly.

It is further contemplated in the scope of the present invention that of course not only one primary sensor or one type of primary sensor and not only one redundant sensor or one type of redundant sensor are used, but the presented redundancy approach may be applied to a multiplicity of different monitoring or, as the case may be, machine condition sensor systems.

The term "computer-aided" or "computer-assisted" shall particularly mean in the context of the present invention that the method is implemented such that a processor executes at least one process step.

The term "read out" or "readings" or a related technical context shall be understood such that the related entity or sensor (to be read out) may be read out online, i.e. (instantaneously) during the manufacturing process, as well as with a certain delay or temporal offset as may be the case when the related reading pertains to historical data, or the like. Preferably, said term(s) shall pertain to the mere gathering of data sensor data in real-time during the manufacturing process.

In turn, the term "processor" may denote in this context a machine or an electronic circuit. Particularly, said processor may be or may relate to a central processing unit (CPU), an associated processor, a microprocessor or microcontroller, a digital signal processor (DSC), an application specific integrated circuit (ASIC), specifically a so-called field programmable gate array (FPGA) or to a graphic processing unit (CPU). Likewise, the processor may be or relate to a virtual processor, a virtual machine or soft CPU. Furthermore, a programmable processor is contemplated which is provided with a configuration of method steps of the present invention.

A computer program (product) as may be subject to the present invention may be stored on a storage unit or memory device which may, in turn, pertain to a volatile memory, such as a random access memory (RAM), or a non-volatile memory like a hard disk or another storage medium.

The term "providing" shall pertain in the context of the invention either that a physical entity is provided and/or that any data may be provided by rendering, storing, loading or similar measures.

Actually, a skilled person is aware of the fact that conventional as well as inventive variants of implementation of a given solution may be realized via hardware and/or via software. Specific or components of a method or an apparatus may further be composed of hardware components and software components in order to realize a given solution. Particularly, this may be the case, once a part of the inventive merits or solutions is effectuated by specialized hardware, such as an ASIC or FPGA and/or another part of it may be effectuated by a processor, computer or storage-based software.

## Claims

1. Method for quality assurance in additive manufacturing monitoring, the method comprising:
- (i) providing a machine control unit (6) of an additive manufacturing system (100), the control unit (6) being coupled to a primary machine sensor (4) and a redundant machine sensor (4'),
- (ii) conducting a sensor check, wherein the primary sensor (4) and the redundant sensor (4') are read out and the respective readings of the primary sensor (4) and the redundant sensor (4') compared,
- (iii) conducting an algorithm check, wherein a primary algorithm (A) and a backup algorithm (A, B) are executed for each of the sensor readings, and
- (iv) applying a logic AND-function with the checked sensor readings as input each with a result of the primary algorithm (A) as input and with a result of the backup algorithm (A, B) as input, respectively, wherein a manufacturing process of the system (100) is only maintained when the AND-functions read out "true" (T) and wherein - when the AND-functions read out "false" (F) - the process (P) is aborted.

2. Method according to claim 1, wherein primary sensor (4) is a monitoring and/or machine condition sensor, and the redundant sensor (4') is a sensor of the same type.

3. Method according to claim 1 or 2, wherein the primary sensor (4) is set up to detect a process anomaly (a), such as a hot spot (s), a structural defect and/or a recoating deficiency during the manufacture of a workpiece (10).

4. Method according to one of the previous claims, wherein the primary sensor (4) is an optical camera and/or an optical tomography device.

5. Method according to one of the previous claims, wherein the primary algorithm (A) comprises a provision for monitoring and/or evaluating an operation of the sensors (4), wherein said provision proves if the system (100) is in a proper condition.

6. Method according to claim 5, wherein the proper condition demands sensor values to comply to a predetermined set of ranges.

7. Method according to one of the previous claims, wherein the backup algorithm (B, C) is different from the primary algorithm (A), and wherein the backup algorithm is set up to prove if an algorithmic fault occurred.

8. Method according to one of claims 1 to 6, wherein the backup algorithm (A) resembles the primary algorithm (A), and wherein the backup algorithm (A) is set up to prove if an algorithmic fault occurred.

9. Method according to one of the previous claims, wherein the control unit (6) is set up such that any detected fault can be traced back.

10. Method according to one of the previous claims, wherein - when the AND-functions read out "true" (T) - the process is either continued or interrupted and/or repaired.

11. Method according to claim 10, wherein a conditional (C) is implemented, to which checked sensor readings are put in and - only if a threshold of the sensor values is exceeded - the process is interrupted and/or repaired, otherwise, the process is continued.

12. Method according to claim 10, wherein the conditional (C) is part of a closed-loop methodology.

13. Method of additive manufacturing a workpiece, preferably by a powder bed fusion method, like selective laser sintering, selective laser melting or electron beam melting, applying the quality assurance method according to one of the previous claims.

14. Control unit (6) configured to carry out the method of one of claims 1 to 12, wherein the control unit (6) is set up to be part of a powder bed fusion additive manufacturing system (100).

15. A computer program product (CP) comprising instructions which, when the program is executed by a data processing apparatus or a computer, cause it to carry out the method of one of claims 1 to 12.
